# EUROPEAN PATENT APPLICATION

(11) **EP 4 832 605 A1**
(43) Date of publication of application: **28.10.2026**
(21) Application number: 25902431.3
(22) Date of filing: 23.09.2025
(51) Int. Cl.: H04W 68/00

(54) **USER EQUIPMENT PAGING METHOD AND APPARATUS, AND PROGRAM PRODUCT AND STORAGE MEDIUM**

(30) Priority: 14.03.2025 CN 202510309003
(71) Applicant: China Satellite Network Innovation Co., Ltd, Beijing 100029 (CN)
(72) Inventor: ZHOU, Changsheng, Beijing 100029 (CN); SUN, Yuexin, Beijing 100029 (CN); YAO, Dingyi, Beijing 100029 (CN); MEI, Chengli, Beijing 100029 (CN); LI, Jie, Beijing 100029 (CN); MANG, Ge, Beijing 100029 (CN)
(74) Representative: Forresters IP LLP
(86) International application number: PCT/CN2025/123357
(87) International publication number: WO 2026/188773

(57) **Abstract**

Provided are a method and apparatus for paging a user equipment, a program product and a storage medium. The method comprises: receiving first beam footprint information sent by a first base station, wherein the first beam footprint information is determined by the first base station on the basis of position information of a target user equipment, and the first base station is a base station for communication after a connection between the target user equipment and a core network has been established; determining a target paging area of the target user equipment on the basis of the first beam footprint information; and respectively sending a target paging message to N second base stations, wherein the target paging message comprises a device identifier of the target user equipment and target beam footprint information of the target paging area, and the target paging message is used for paging the target user equipment in the N second base stations, N being a positive integer. By means of the present disclosure, the problem in the related art of low accuracy of paging a user equipment is solved, and the effect of improving the accuracy of paging the user equipment is achieved.

## Description

### Cross-Reference to Related Application

The present disclosure claims priority to Chinese Patent Application No. 202510309003.1, filed with the Chinese Patent Office on March 14, 2025 and entitled "Method and Apparatus for Paging User Equipment, Program Product, and Storage Medium", which is incorporated herein by reference in its entirety.

### Technical Field

Embodiments of the present disclosure relate to the field of communications, and in particular, to a method and apparatus for paging a user equipment, a program product, and a storage medium.

### Background

With the rapid development of mobile communication technology, space and ground networks have formed two major independent communication networks. To achieve efficient resource sharing and interconnection, the integrated space-ground network, which combines space and ground, has become a new trend of development. When the network side has downlink data or signaling, the core network searches for a corresponding base station according to a tracking area code (TAC) previously registered by the user, and the base station sends a paging message to page the user until the user is found. However, in order to protect privacy security of a user, the user needs to perform fuzzy processing when reporting position information, so as to avoid leakage of an accurate position. After having received the information of the fuzzy position reported by the user, the base station needs to further perform fuzzy processing, and then reports the information to the core network. Although this dual fuzzy processing enhances privacy protection, it also brings the problem that the accuracy of paging the user equipment is greatly reduced.

### Summary

Embodiments of the present disclosure provide a method and apparatus for paging a user equipment, a program product and a storage medium, so as to at least solve the problem in the related art of low accuracy of paging a user equipment.

According to one embodiment of the present disclosure, provided is a method for paging a user equipment, comprising: receiving first beam footprint information sent by a first base station, wherein the first beam footprint information is determined by the first base station on the basis of position information of a target user equipment, and the first base station is a base station for communication after a connection between the target user equipment and a core network has been established; determining a target paging area of the target user equipment on the basis of the first beam footprint information; and respectively sending a target paging message to N second base stations, wherein the target paging message includes a device identifier of the target user equipment and target beam footprint information of the target paging area, and the target paging message is used for paging the target user equipment in the N second base stations, N being a positive integer.

In an exemplary embodiment, receiving the first beam footprint information sent by the first base station includes: receiving a first signaling message sent by the first base station, wherein the first signaling message is used for indicating that the connection between the target user equipment and the core network has been released; parsing the first signaling message to obtain a first tracking area identifier; and determining the first beam footprint information on the basis of the first tracking area identifier.

In an exemplary embodiment, before receiving the first beam footprint information sent by the first base station, the method further includes: receiving a second signaling message sent by an initial base station, wherein the initial base station is a base station for communication when a connection between the target user equipment and the core network is requested to be established, and the second signaling message is used for indicating beam footprint information of the target user equipment; parsing the second signaling message to obtain a second tracking area identifier; determining initial beam footprint information on the basis of the second tracking area identifier, wherein the initial beam footprint information is determined by the initial base station on the basis of initial position information sent by the target user equipment; and establishing the connection between the target user equipment and the core network on the basis of the initial beam footprint information.

In an exemplary embodiment, determining the target paging area of the target user equipment on the basis of the first beam footprint information includes: determining a beam footprint of the target user equipment on the basis of a target beam footprint identifier included in the first beam footprint information, wherein the target beam footprint identifier is used for uniquely identifying the beam footprint of the target user equipment; and determining the target paging area on the basis of the beam footprint of the target user equipment.

In an exemplary embodiment, determining the target paging area on the basis of the beam footprint of the target user equipment includes: determining a distance threshold matching the target user equipment; and determining the target paging area on the basis of the beam footprint of the target user equipment and the distance threshold.

In an exemplary embodiment, before respectively sending the target paging message to the N second base stations, the method further includes: determining, on the basis of the target paging area and beam footprint plan information, the N second base stations and second beam footprint information of each of the N second base stations, wherein the beam footprint plan information includes information of beam footprints covered by base stations within a predetermined time period; and respectively sending the target paging message to the N second base stations includes: respectively sending the target paging message to each of the N second base stations on the basis of the second beam footprint information of each of the N second base stations.

In an exemplary embodiment, determining, on the basis of the target paging area and beam footprint plan information, the N second base stations and the second beam footprint information of N second base stations includes: determining, on the basis of a plurality of first target beam footprint identifiers included in the target beam footprint information, a plurality of first target beam footprints covered by the target paging area, wherein each of the plurality of first target beam footprint identifiers is used for uniquely identifying a corresponding one of the plurality of first target beam footprints; determining, on the basis of the plurality of first target beam footprints covered by the target paging area and the beam footprint plan information, the N second base stations, wherein the N second base stations cover the plurality of first target beam footprints covered by the target paging area; and determining, on the basis of a base station identifier of each of the second base stations, the plurality of second target beam footprints covered by each of the second base stations, so as to obtain second beam footprint information of the N second base stations, wherein the plurality of second target beam footprints covered by the N second base stations include the plurality of first target beam footprints.

According to another embodiment of the present disclosure, provided is a method for paging a user equipment, comprising: receiving a target paging message, wherein the target paging message is used for indicating to page a target user equipment; parsing the target paging message to obtain target beam footprint information of the target user equipment and an equipment identifier of the target user equipment; and paging the target user equipment on the basis of the target beam footprint information and the equipment identity of the target user equipment.

In an exemplary embodiment, receiving a target paging message includes: receiving the target paging message sent by a target network element, wherein the target paging message is sent by the target network element on the basis of a target paging area, and the target paging area is a paging area of the target user equipment, Furthermore, the target paging area is determined by the target network element on the basis of received first beam footprint information from the first base station, the first beam footprint information is determined by the first base station on the basis of the location information of the user equipment, The first base station is a base station that performs communication after the target user equipment establishes a connection with the core network.

In an exemplary embodiment, the target network element includes an access and mobility management function (AMF).

According to an embodiment of the present disclosure, provided is an apparatus for paging a user equipment, comprising a memory, a processor and a computer program stored in the memory and operable in the memory, wherein the processor, when executing the foregoing computer program, implements the following operations: receiving first beam footprint information sent by a first base station, wherein the first beam footprint information is determined by the first base station on the basis of position information of a target user equipment, and the first base station is a base station for communication after a connection between the target user equipment and a core network has been established; determining a target paging area of the target user equipment on the basis of the first beam footprint information; and respectively sending a target paging message to N second base stations, wherein the target paging message includes a device identifier of the target user equipment and target beam footprint information of the target paging area, and the target paging message is used for paging the target user equipment in the N second base stations, N being a positive integer.

According to an embodiment of the present disclosure, provided is an apparatus for paging a user equipment, comprising: a memory, a processor, and a computer program stored in the memory and operable in the memory, wherein the processor, when executing the computer program, implements the following operations: receiving a target paging message, wherein the target paging message is used for indicating to page a target user equipment; parsing the target paging message to obtain target beam footprint information of the target user equipment and an equipment identifier of the target user equipment; and paging the target user equipment on the basis of the target beam footprint information and the equipment identity of the target user equipment.

According to another embodiment of the present disclosure, provided is a computer program product comprising a computer program, wherein the computer program is configured to be executed by a processor to implement the operations of any one of the foregoing method embodiments.

According to still another embodiment of the present disclosure, further provided is a computer readable storage medium storing a computer program, wherein the computer program is configured to be executed by a processor to implement the operations of any one of the foregoing method embodiments.

According to another embodiment of the present disclosure, also provided is an electronic device, comprising a memory, a processor and a computer program stored in the memory and executable on the processor, wherein the processor is configured to execute the computer program to implement the operations of any one of the method embodiments.

In the embodiments of the present disclosure, when determining a target paging area of a target user equipment, the target paging area is determined on the basis of first beam footprint information, and the first beam footprint information is related to position information of the target user equipment, wherein determining a paging area by means of the beam footprint information may cover adjacent beam footprints to which a user equipment may move. The method for calculating a paging area on the basis of a beam footprint may more accurately determine a paging area compared with calculation based on fuzzy position, and therefore the problem in the related art of low accuracy of paging a user equipment is solved, and the effect of improving the accuracy of paging the user equipment is achieved.

### Brief Description of the Drawings

Fig. 1 is a diagram of a TAI scheme in which base stations are bound to geographic locations;
Fig. 2 is a flowchart of a method for paging a user equipment in the related art;
Fig. 3 is a schematic diagram of a paging area according to an embodiment of the present disclosure;
Fig. 4 is a hardware structure block diagram of a mobile terminal in a method for paging a user equipment according to an embodiment of the present disclosure;
Fig. 5 is a first flowchart of a method for paging a user equipment according to an embodiment of the present disclosure;
Fig. 6 is a schematic diagram of a tracking area code in a method for paging a user equipment according to an embodiment of the present disclosure;
Fig. 7 is a schematic diagram of a tracking area identifier in a method for paging a user equipment according to an embodiment of the present disclosure;
Fig. 8 is a first flowchart of a method for paging a user equipment according to an embodiment of the present disclosure;
Fig. 9 is a second flowchart of a method for paging a user equipment according to an embodiment of the present disclosure;
Fig. 10 is a schematic diagram of a target paging area in a method for paging a user equipment according to a specific embodiment of the present disclosure;
Fig. 11 is a second flowchart of a method for paging a user equipment according to an embodiment of the present disclosure;
Fig. 12 is a third flowchart of a method for paging a user equipment according to an embodiment of the present disclosure;
Fig. 13 is a schematic diagram of a tracking area identifier in a method for paging a user equipment according to a specific embodiment of the present disclosure;
Fig. 14 is a first structure block diagram of an apparatus for paging a user equipment according to an embodiment of the present disclosure;
Fig. 15 is a second structure block diagram of an apparatus for paging a user equipment according to an embodiment of the present disclosure.

### Detailed Description of the Embodiments

The embodiments of the present disclosure are described in detail with reference to the accompanying drawings and in conjunction with the embodiments.

It should be noted that, the terms "first", "second", etc. in the description, claims and drawings of the present disclosure are used to distinguish similar objects, and do not need to be used to describe a specific order or sequence.

First, the related art to which the present disclosure relates will be described:
In traditional terrestrial 5G networks, registration is the first procedure executed after the user equipment is powered on. By means of registration, the user equipment may connect to the network and obtain services from the network. The registrations of the user equipment supported by a core network includes initial registration, mobility registration and periodical registration.

With regard to initial registration, a user initially registers to a 5G network, and a radio access network (RAN) selects a suitable access and mobility management function (AMF). The AMF supports user equipment authentication based on subscription authentication information in an Authentication Server Function (AUSF), acquires mobility management subscription data from Unified Data Management (UDM), and registers its own ID in the UDM, so as to complete the registration request. The AMF establishes mobility management context (MM context) for the user equipment, and changes the mobility state of the user equipment to registered state-registered (RM-REGISTERED).

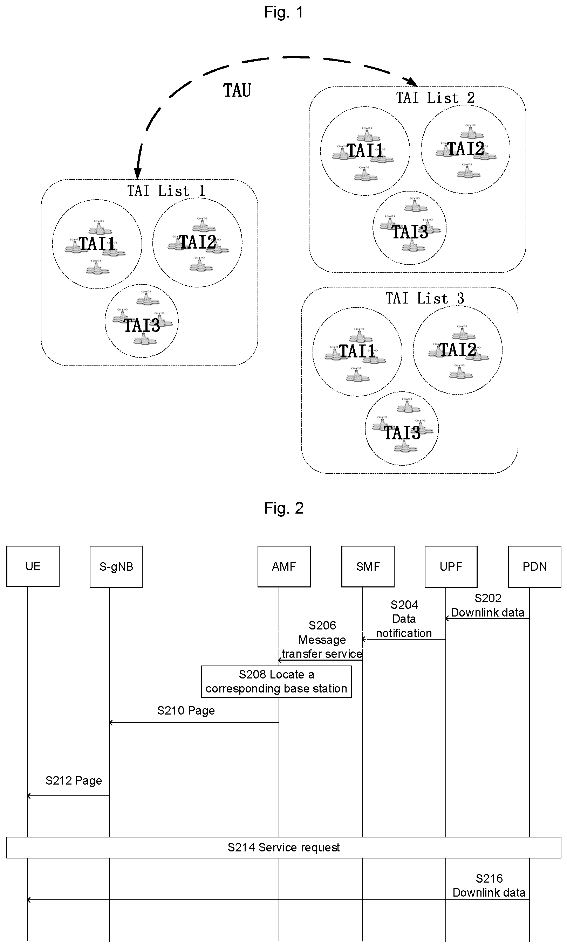

For mobility registration, when the AMF allocates a registration area to the user equipment, and the user equipment's movement or other situations cause a change in the Tracking Area Identifier (TAI) where the user equipment resides, or when the user equipment needs to update its capability or other parameters and requires negotiation by means of the registration procedure, the user equipment initiates the Tracking Area Update (TAU) procedure to report the current TAI of the user equipment to the network. A conventional location registration scheme uses a TAI-based TAU scheme. As shown in Fig. 1, TAI1 in a TAI List 1 shown in Fig. 1 corresponds to a group of base stations. In order to reduce paging, a tracking area identity list (TAI List) consists of a plurality of TAIs. In the cases of initial registration of the user equipment, mobility update (TAI change) registration, periodical registration, emergency registration and so on, a registration process will be initiated. When the TAI List to which the UE belongs changes, a TAU is triggered. The network searches for a user by paging, and performs paging in an area corresponding to the TAI List by taking a cell as a unit.

For periodical registration, the AMF supports issuing of a periodical registration update duration to the UE during the initial registration, mobility registration, and periodical registration. When the periodical registration update duration expires, the user equipment in a connection mode-idle state (CM-IDLE) updates that the user equipment is still reachable in the network; and the AMF may handle the periodic registration update request initiated by the user equipment. After the user registration is completed, when the user is in a CM-IDLE state and the network side has data or signaling that needs to be sent to the user equipment, the paging procedure is triggered. When the user equipment is in a connection mode-connected state (CM-CONNECTED), certain designated protocol data unit (PDU) sessions may also be activated by a paging procedure; and a user equipment plane connection may be established to perform data transmission. As shown in Fig. 2, a conventional process of paging a UE includes the following operations:
S202: a user plane function (UPF) receives Downlink Data from a packet data network (PDN);
S204: the UPF reports, to a session management function (SMF) and by means of Data Notification, that the network side has downlink data to be forwarded to the target UE;
S206: the SMF calls Namf_Communication_N1N2 Message Transfer NAMF (i.e. message transfer service) communication N1/N2 message conversion of the AMF, so as to subsequently send N1 and N2 interface messages to the second base station by means of the AMF;
S208: the AMF locates a corresponding base station on the basis of the TAC (the TAC is included in the TAI) registered previously by the user equipment;
S210: the AMF sends a paging message to the corresponding base station;
S212: the base station pages the user equipment within a TAC range registered previously by the user equipment until the user equipment is found;
S214: a service request is executed between the core network, the target UE and the S-gNB₂, wherein the Service request is a request initiated by the target UE in the 5G network to the network and used for requesting to establish or continue the data transmission service;
S216: after the Service Request is executed between the core network, the target UE and the S-gNB₂, the target UE receives the Downlink Data transmitted from the PDN.

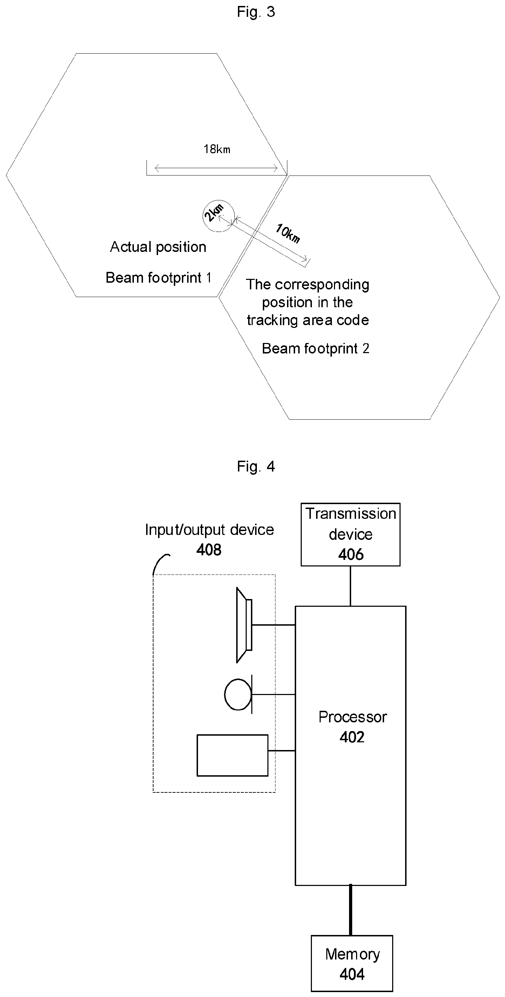

In conventional location-based paging schemes, the user equipment performs fuzzy processing on its own location information, with a fuzzy error of about 2 kilometers; after receiving the location information reported by the user equipment, the base station will re-perform fuzzy processing and then report same to the core network, with a fuzzy error of about 10 km. Location fuzzy may lead to a beam footprint obtained by the core network from the TAC reported by the base station to correspond to the adjacent beam footprint of a beam footprint where the user equipment is actually located, as shown in Fig. 3. Due to the deviation caused by the fuzzy location, during paging calculation of the core network, the user position may exist in a plurality of beam footprints, resulting in issues such as paging errors and low paging efficiency.

The method embodiment provided in the embodiments of the present disclosure may be executed in a mobile terminal, a computer terminal, or a similar computing device. Taking operation on a mobile terminal as an example, Fig. 4 is a hardware structure block diagram of a mobile terminal in a method for paging a user equipment according to an embodiment of the present disclosure. As shown in Fig. 4, the mobile terminal may include one or more (only one is shown in Fig. 4) processors 402 (the processors 102 may include, but are not limited to, a microprocessor MCU or a processing device such as a programmable logic device FPGA) and a memory 404 configured to store data, wherein the mobile terminal may further include a transmission device 406 for a communication function and an input/output device 408. Those ordinarily skilled in the art may appreciate that the structure shown in Fig. 4 is for illustrative purposes only, but not limit the structure of the mobile terminal. For example, the mobile terminal may also include more or fewer components than that shown in Fig. 4, or have a different configuration than that shown in Fig. 1.

The memory 404 may be configured to store a computer program, for example, a software program and a module of application software, such as a computer program corresponding to the method for paging the user equipment in the embodiments of the present disclosure. The processor 402 runs the computer program stored in the memory 404, so as to execute various function applications and data processing, that is, to implement the foregoing method. The memory 404 may include a high-speed random access memory, and may also include a non-transitory memory, such as one or more magnetic storage apparatuses, flash memories, or other non-transitory solid-state memories. In some instances, the memory 404 may further include memories remotely arranged with respect to the processor 402, and these remote memories may be connected to the mobile terminal over a network. Examples of the described network include, but are not limited to the Internet, an intranet, a local area network, a mobile communication network, and a combination thereof.

The transmission device 406 is configured to receive or transmit data by a network. Specific examples of the described network may include a wireless network provided by a communication provider of the mobile terminal. In one example, the transmission device 406 includes a network interface controller (NIC) which may be connected to other network devices by means of a base station, thereby being able to communicate with the Internet. In one example, the transmission device 406 may be a radio frequency (RF) module for communicating wirelessly with the Internet.

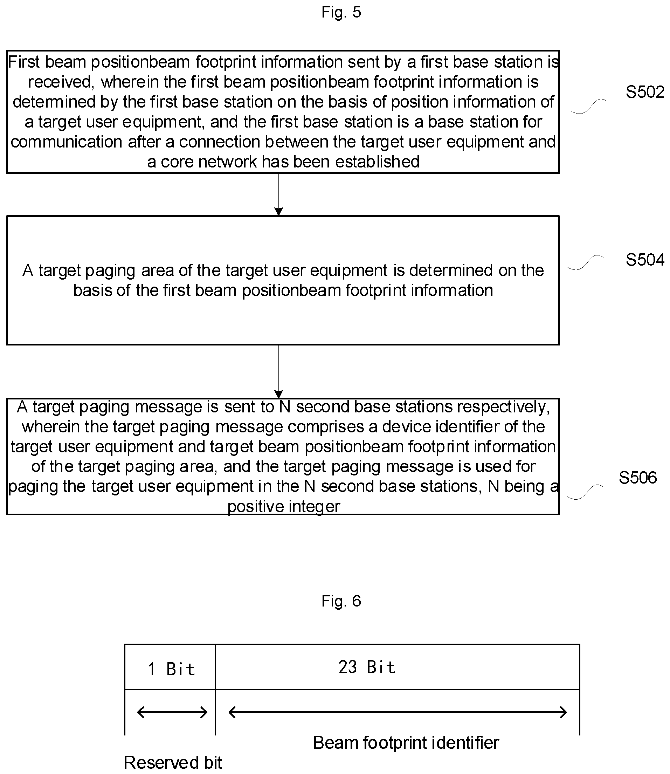

Provided is a method for paging a user equipment in the present embodiment. Fig. 5 is a first flowchart of a method for paging a user equipment according to an embodiment of the present disclosure. As shown in Fig. 5, the flow includes the following operations:
operation S502: first beam footprint information sent by a first base station is received, wherein the first beam footprint information is determined by the first base station on the basis of position information of a target user equipment, and the first base station is a base station for communication after a connection between the target user equipment and a core network has been established.

In an exemplary embodiment, the first base station may be a serving Geostationary NodeB (S-gNB).

In an exemplary embodiment, the first beam footprint information includes, but is not limited to, a beam footprint identifier of a beam footprint where the target user equipment (UE) is located.

In an exemplary embodiment, the first beam footprint information is beam footprint information converted from the latest position information reported by the target UE to the first base station when the connection between the target UE and the core network is still in a connected state, not yet in an idle state.

In an exemplary embodiment, the connection between the target UE and the core network includes, but is not limited to CM-IDLE and CM-CONNECTED. The connected state may be CM-CONNECTED.

Operation S504: a target paging area of the target user equipment is determined on the basis of the first beam footprint information.

Operation S506: a target paging message is sent to N second base stations respectively, wherein the target paging message includes a device identifier of the target user equipment and target beam footprint information of the target paging area, and the target paging message is used for paging the target user equipment in the N second base stations, N being a positive integer.

In an exemplary embodiment, the second base station may be an S-gNB.

In an exemplary embodiment, the device identifier of the target UE may be a 5G Globally Unique Temporary Identifier (5G-GUTI). A temporary identifier for uniquely identifying the UE in the 5G network is allocated by the AMF, and is used for the network to rapidly identify the UE. The device identifier of the target UE may also be a subscriber concealed identifier (SUCI), which is an identifier for protecting the privacy of the user and is generated by encrypting a user permanent identifier (SUPI) of the user. The device identifier of the target UE may also be a permanent equipment identifier (PEI), which is used to identify the device of the UE.

The method for paging a user equipment shown in Fig. 5 will be described below with reference to a specific example, and in this embodiment, the S-gNB₁ (corresponding to the first base station) sends a beam footprint identifier 0000 0000 0000 0000 0001 to the AMF, in which the beam footprint identifier 0000 0000 0000 0000 0001 is an identifier obtained by the S-gNB₁ after converting the latest position information reported by the target UE when it is determined that the connection between the target UE and the core network is in a connected state. The AMF determines the target paging area of the target UE on the basis of the beam footprint identifier 0000 0000 0000 0001 of the target UE. The AMF sends a target paging message to an S-gNB₂, an S-gNB₃ and an S-gNB₄ (corresponding to the N second base stations) respectively; and the S-gNB₂, the S-gNB₃ and the S-gNB₄ respectively page the target UE according to the device identifier of the target UE and the beam footprint identifier included in the target paging area.

Furthermore, during the process when the connection relationship between the target UE and the core network changes from a connected state to an idle state, the target UE may experience a position change, which in turn will cause a change in its beam footprint identifier, for example, changing to 0000 0000 0000 0000 0000 0010 (in the present embodiment, taking an example where a beam footprint area identified by the beam footprint identifier 0000 0000 0000 0000 0000 0010 is only covered by the S-gNB₂), in this case, only the S-gNB₂ may page the target UE, and the S-gNB₃ and the S-gNB₄ cannot page the target UE. It should be noted that the foregoing content is only an example of the present disclosure, and common changes and replacements made by a person skilled in the art within the scope of the technical solutions of the present disclosure shall fall within the scope of protection of the present disclosure. For example, the number of second base stations is not limited to three, but may also be five, seven or more; the beam footprint identifier of the target UE is not limited to the binary representation described above; it may also be represented using other parameters, such as Arabic numerals or alphanumeric characters.

In the present embodiment, an execution subject of the foregoing operations may be an access and mobility management function (AMF), or a processing network element or system integrated with the AMF, or a network element or system having an association relationship with the AMF, or another device or system having a similar processing capability.

By means of the described operations, when determining a target paging area of a target user equipment, the target paging area is determined on the basis of first beam footprint information, and the first beam footprint information is related to position information of the target user equipment, wherein determining a paging area by means of the beam footprint information may cover adjacent beam footprints to which a user equipment may move. The method for calculating a paging area on the basis of a beam footprint may more accurately determine a paging area compared with calculation based on fuzzy position, and therefore the problem in the related art of low accuracy of paging a user equipment is solved, and the effect of improving the accuracy of paging the user equipment is achieved.

In an exemplary embodiment, receiving the first beam footprint information sent by the first base station includes: receiving a first signaling message sent by the first base station, wherein the first signaling message is used for indicating that the connection between the target user equipment and the core network has been released; parsing the first signaling message to obtain a first tracking area identifier; and determining the first beam footprint information on the basis of the first tracking area identifier.

In an exemplary embodiment, the first signaling message may be Context Release Complete (i.e. a user equipment context release completion message); and the first base station adds the first beam footprint information in the TAI by reusing a TAI field (corresponding to the first tracking area identifier) in User Location Information (i.e. user location information) cell in the Context Release Complete.

In the present embodiment, the beam footprint identifier (corresponding to the first beam footprint information) may be written into a TAC to form a part of a TAI information element, wherein the number of bytes for filling the beam footprint identifier in the TAC may be 3 bytes, and the filling position may be the 23 bits in the TAC used to represent the beam footprint identifier in the TAC, as shown in Fig. 6. It should be noted that, the above example is only an implementation mode, and common changes and replacements made by persons skilled in the art within the scope of the technical solutions of the present disclosure should all fall within the scope of protection of the present disclosure. For example, in actual applications, the number of bytes for filling the beam footprint identifier in the TAC is not limited to the aforementioned 3 bytes; it may also be 4 bytes or 5 bytes.

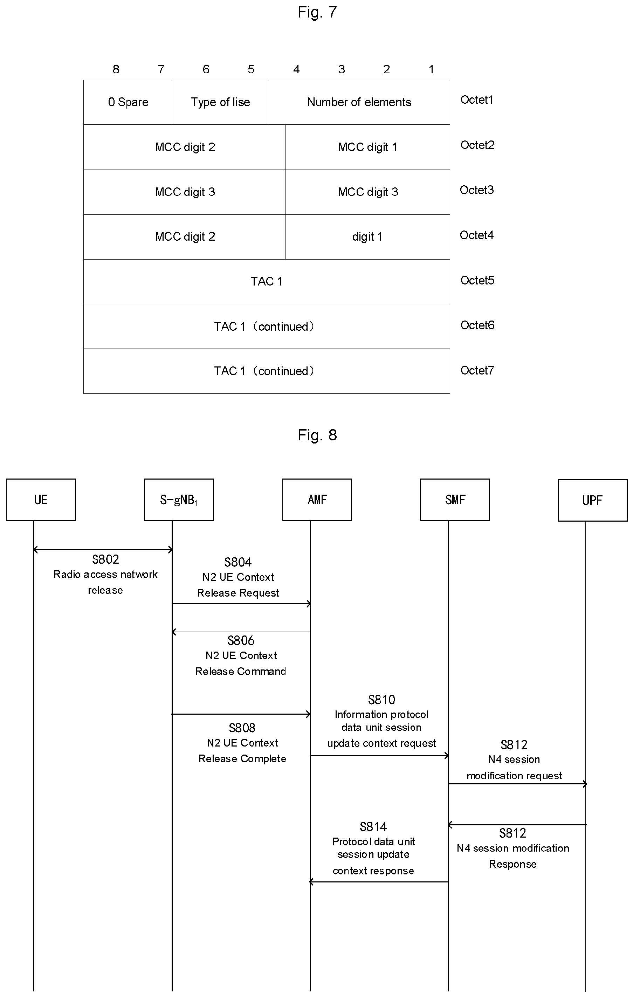

The format of the TAI information will be described below in conjunction with a specific example. As shown in Fig. 7, in addition to TAC1 of the UE, the TAI information of the UE may further include at least one of the following information: 0 Spare, Type of list, Number of elements, Mobile Country Code (MCC) and Mobile Network Code (MNC),
wherein 0 Spare, Type of list, and Number of elements may occupy octet1 (i.e. the first byte); the MCC may occupy octet2 (i.e. the second byte) and octet3 (i.e. the third byte); the MNC may occupy octet3 (i.e. the third byte) and octet4 (i.e. the fourth byte); TAC1 may occupy octet5 (i.e. the fifth byte), octet6 (i.e. the sixth byte), and octet7 (i.e. the seventh byte).

The 0 Spare may occupy 1 bit, the Type of list may occupy 2 bits, the Number of elements may occupy 5 bits, the MCC may occupy 12 bits, the MNC may occupy 12 bits, and the TAC may occupy 3 bytes. It should be noted that, the above example is only an implementation mode, and common changes and replacements made by persons skilled in the art within the scope of the technical solutions of the present disclosure should all fall within the scope of protection of the present disclosure. For example, the position occupied by the foregoing information and the number of occupied bits may be adjusted according to actual applications.

In the present embodiment, by parsing a first signaling message sent by a first base station to obtain a tracking area identifier, and reusing the tracking area identifier in the signaling message, first beam footprint information may be transmitted without increasing additional signaling overheads, thereby achieving the purpose of reducing the resource consumption for transmitting the first beam footprint information.

In an exemplary embodiment, before receiving the first signaling message sent by the first base station, the method further includes: when the connection between the target user equipment and the core network transitions from a connected state to an idle state, in response to a third signaling message sent by the first base station, feeding back a fourth signaling message to the first base station on the basis of the third signaling message, wherein the third signaling message is used for requesting the release of the connection between the target user equipment and the core network, and the fourth signaling message being used for indicating that the connection between the target user equipment and the core network has been released.

In an exemplary embodiment, the third signaling message may be a UE Context Release Request. The fourth signaling message may be a UE Context Release Command. In the present embodiment, when the target UE enters an idle state, resources related to the target UE are released, thereby achieving the purpose of improving the utilization rate of network resources.

In an exemplary embodiment, Fig. 8 is a first flowchart of a method for paging a user equipment according to an embodiment of the present disclosure. As there has been no communication interaction between the core network and the target UE for a long time, a connection relationship between the target UE and the core network enters a CM-IDLE from a CM-CONNECTED, the S-gNB₁ triggers an AN Release (i.e., radio access network release) procedure to terminate the connection between the target UE and the RAN. As shown in Fig. 8, the method includes the following operations:
S802: the connection relationship between the target UE and the core network enters the CM-IDLE from the CM-CONNECTED, the S-gNB₁ triggers an AN Release, i.e. radio access network release, procedure, and the S-gNB₁ starts to release a Radio Resource Control (RRC) connection with the target UE;
S804: the S-gNB₁ initiates a UE Context Release Request to the AMF, to request to release the connection between the target UE and the core network;
S806: the AMF sends a UE Context Release Command to the S-gNB₁ in response to the UE Context Release Request, so as to instruct the S-gNB₁ to release the UE Context;
S808: the S-gNB₁ sends the beam footprint identifier 0000 0000 0000 0000 0001 (i.e. the first beam footprint information) of the target UE to the core network by reusing the TAI field (corresponding to the first tracking area identifier) in the User Location Information cell in the UE Context Release Complete; and the beam footprint identifier 0000 0000 0000 0000 0000 0001 of the target UE is the beam information converted from the latest location information reported by the target UE to the first base station when the connection between the target UE and the core network is still in a connected state, not yet in an idle state;
S810: the AMF sends the Nsmf_PDUSession_UpdateSMContext Request (i.e. an information protocol data unit session update context request) to the SMF, and requests to update or modify the SM Context (i.e. a session management context) of the PDU Session (i.e. a protocol data unit session) of the target UE;
S812: the SMF initiates an N4 session modification request to the UPF by means of the N4 interface, so as to update a service data forwarding rule on the UPF; and the UPF provides an N4 session modification response to the SMF by means of the N4 interface, wherein the response includes information about whether the session modification is successful, and any possible failure reason, in a case wherethe session modification is successful, the UPF will process and transmit data according to the new configuration or policy;
S814: the SMF sends an Nsmf_PDUSession_UpdateSMContext Response (i.e. a protocol data unit session update context response) to the AMF to complete the AN Release.

In an exemplary embodiment, before receiving the first beam footprint information sent by the first base station, the method further includes: receiving a second signaling message sent by an initial base station, wherein the initial base station is a base station for communication when a connection between the target user equipment and the core network is requested to be established, and the second signaling message is used for indicating beam footprint information of the target user equipment; parsing the second signaling message to obtain a second tracking area identifier; determining initial beam footprint information on the basis of the second tracking area identifier, wherein the initial beam footprint information is determined by the initial base station on the basis of initial position information sent by the target user equipment; and establishing the connection between the target user equipment and the core network on the basis of the initial beam footprint information.

In an exemplary embodiment, an initial base station is a base station connected when a target UE is registered, and the first base station is a base station when the target UE enters an idle state. During communication, the base station may remain unchanged or may change, and therefore, the first base station may be the initial base station or another base station.

In an exemplary embodiment, the second signaling message may be Location Report (i.e., location reporting information). The initial position information may be Global Navigation Satellite System position information (GNSS position information). The initial beam footprint information includes, but is not limited to, an initial beam footprint identifier of a beam footprint where the target UE registers to the core network but does not register to the core network. the initial base station adds initial beam footprint information to the TAI by reusing a TAI field (corresponding to the described second tracking area identifier) in a location report.

In an exemplary embodiment, on the basis of the initial beam footprint information, establishing a connection between the target user equipment and the core network includes: on the basis of a fifth signaling message sent by an initial base station and the initial beam footprint information, establishing a connection between the target user equipment and the core network, wherein the fifth signaling message is used for requesting to establish the connection between the target user equipment and the core network.

In an exemplary embodiment, the fifth signaling message may be a Registration Request (i.e., registration request message), wherein the Registration Request includes, but is not limited to, a registration type, a user identifier, and a UE capability.

In an exemplary embodiment, an S-gNB₁ sends a registration request and an initial beam footprint identifier 0000 0000 0000 0010 (corresponding to the described initial beam footprint information) of a target UE to an AMF, and the AMF responds to the registration request and establishes a connection between the target UE and a core network, and at this moment, a connection relationship between the target UE and the core network is in a CM-CONNECTED, in which the initial beam footprint identifier 0000 0000 0000 0010 is generated by an S-gNB₁ on the basis of initial position information sent by the target UE. It should be noted that the foregoing content is only an example of the present disclosure, and common changes and replacements made by persons skilled in the art within the scope of the technical solutions of the present disclosure shall fall within the scope of protection of the present disclosure, For example, the initial beam footprint identifier of the target UE is not limited to the described binary number, and may also be identified by other parameters, For example, Arabic numerals and English characters may be used for identifier. In this embodiment, by directly acquiring position information of a target UE reported by a base station, an AMF may directly establish a connection relationship with the target UE on the basis of the position information of the target UE; and the AMF conducts a corresponding calculation on the basis of the position information of the target UE, the accuracy of the position of a sending paste is higher, the calculation complexity is lower, and the purpose of reducing the calculation complexity is achieved.

In an exemplary embodiment, the signaling procedure is on the basis of a fifth signaling message and initial beam information sent by an initial base station, establishing a connection between a target user equipment and a core network, comprising: responding to a fifth signaling message sent by an initial base station, and feeding back a sixth signaling message to the target user equipment on the basis of the fifth signaling message, wherein the sixth signaling message is used for indicating to establish a connection between the target user equipment and a core network, a sixth signaling message comprising a distance threshold of a target user equipment; Receive initial beam footprint information sent by an initial base station, and establish a connection between a target user equipment and a core network on the basis of the initial beam footprint information.

In an exemplary embodiment, a sixth signaling message may be a Registration Accept (i.e., registration acceptance information), and the sixth signaling message may be carried in an Initial Context Setup Request.

In an exemplary embodiment, during the process of establishing the connection between the target UE and the core network, the target UE receives the sixth signaling message carrying a distance threshold, and monitors the location information of the target UE on the basis of the distance threshold. After the connection between a target user equipment and a core network has been established, when the target UE moves or other situations cause the location of the target UE to exceed a distance threshold radius area, the target UE initiates a TAU procedure; the base station may reuse a TAI field in a location report, and add current beam footprint information of the target UE in the TAI, so as to update location information of the target UE.

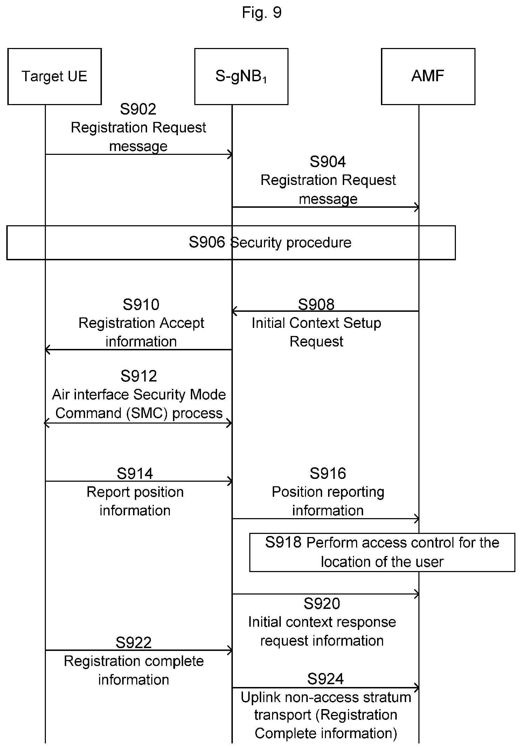

In an exemplary embodiment, Fig. 9 is a second flowchart of a method for paging a user equipment according to a specific embodiment of the present disclosure. The registration implementation process and the process of establishing the connection between the target UE and the core network are shown in Fig. 9, includes the following operations:
S902: the target UE sends a Registration Request to the S-gNB₁, so as to request to establish a connection between the target UE and a core network, wherein the Registration Request includes, but is not limited to, a registration type, a user identifier, and a UE capability.

The registration types include, but are not limited to, initial registration, mobility registration, and periodical registration.

The user identifier may be a 5G-GUTI, i.e., a temporary identifier for uniquely identifying the UE in the 5G network, is allocated by the AMF, and is used for the network to rapidly identify the UE. The user identifier may also be a SUCI, i.e. the identifier for protecting the privacy of a user, and is generated by encrypting the SUPI of the user. The user identifier may also be a PEI for identifying the UE.

The UE capabilities include, but are not limited to, a wireless band supported by the UE, uplink and downlink transmission capabilities, a supported network function, and a security capability.

S904: the S-gNB₁ forwards the Registration Request to the AMF in the core network, to notify the core network that the target UE requests to establish a connection.

S906: the core network, the S-gNB₁ and the target UE execute security procedures such as Non-Access Stratum (NAS) identity recognition request and authentication, so as to acquire identity information from the target UE and verify the identity of the target UE.

S908: after the security procedure is completed, the AMF establishes NAS security context with the target UE; and the AMF initiates an Initial Context Setup Request to the S-gNB₁, wherein the Initial Context Setup Request includes Registration Accept, and the Registration Accept includes a distance threshold Delta of the target UE.

S910: the S-gNB₁ sends the registration Accept information to the target UE, and accepts the registration Request sent by the target UE.

S912: the core network, the S-gNB₁ and the target UE complete the negotiation and transmission of important parameters of integrity and encryption protection by means of a Security Mode Command (SMC) process, so as to ensure the secure transmission of data during communications.

S914: after the target UE and the S-gNB₁ complete the SMC process, the target UE immediately reports the GNSS position information (corresponding to the initial position information) to the S-gNB₁.

S916: after receiving the GNSS position information reported by the target UE, the S-gNB₁ converts the GNSS position information into the beam footprint identifier (corresponding to the initial beam footprint information) of the position where the target UE is located, reuses the TAI field (corresponding to the second tracking area identifier) in the Location Report, adds the initial beam footprint information in the TAI, and reports the beam footprint information of the target UE to the AMF. The number of bytes for filling the beam footprint identifier in the TAC may be 3 bytes, and the filling position may be the 23 bits in the TAC used to represent the beam footprint identifier in the TAC, as shown in Fig. 6. In addition to the TAC of the target UE, the TAI information of the target UE may further include at least one of the following information: 0 Spare of the target UE, Type of list of the target UE, Number of elements of the target UE, MCC of the target UE and MNC of the target UE. The 0 Spare of the target UE occupies 1 bit of the first byte in the TAI information of the target UE; the Type of list of the target UE occupies 2 bits of the first byte in the TAI information of the target UE; and the Number of elements of the target UE occupies 5 bits of the first byte in the TAI information of the target UE; the MCC of the target UE occupies the second byte and 4 bits of the third byte in the TAI information of the target UE; the MNC of the target UE occupies the fourth byte and 4 bits of the third byte in the TAI information of the target UE; the TAC of the target UE occupies the fifth, sixth and seventh bytes in the TAI information of the target UE. It should be noted that, the above example is only an implementation mode, and common changes and replacements made by persons skilled in the art within the scope of the technical solutions of the present disclosure should all fall within the scope of protection of the present disclosure. For example, the position occupied by the foregoing information and the number of occupied bits may be adjusted according to actual applications.

The S-gNB₁ further receives GNSS position information reported by other UEs, converts the GNSS position information into a beam footprint identifier, and writes same in the TAC; the S-gNB₁ manages a correspondence table between a UE and a TAC; as shown in table 1, the TAC includes: TAC#r, TAC#s...TAC#t, wherein TAC#r is obtained by converting GNSS position information of a terminal UE#1 by the base station; TAC#s is obtained by converting the GNSS position information of the terminal UE#2 by the base station; and TAC#t is obtained by converting the GNSS position information of the UE#m by the base station.

**Table 1:**

| | |
|---|---|
| User equipment #1 | Tracking area code #r |
| User equipment #2 | Tracking area code #s |
| ... | ... |
| User equipment #m | Tracking area code #t |

S918: for the position of the target UE in the Location Report, the AMF entity controls the access of the target UE according to the subscription or strategy information.

S920: the S-gNB₁ sends an Initial Context Setup Response (i.e. initial context response request information) to the AMF, indicating that the context setup between the AMF core network and the target UE is successful, and the registration is successful.

S922: the target UE sends a Registration Complete (i.e., registration complete information) to the S-gNB₁.

S924: the S-gNB₁ receives a Registration Complete message, encapsulates the Registration Complete into the Uplink NAS Transport (i.e. uplink non-access stratum transport) and forwards the message to the AMF, so as to complete registration.

In an exemplary embodiment, determining the target paging area of the target user equipment on the basis of the first beam footprint information includes: determining a beam footprint of the target user equipment on the basis of a target beam footprint identifier included in the first beam footprint information, wherein the target beam footprint identifier is used for uniquely identifying the beam footprint of the target user equipment; and determining the target paging area on the basis of the beam footprint of the target user equipment.

In an exemplary embodiment, determining the target paging area on the basis of the beam footprint of the target user equipment includes: determining a distance threshold matching the target user equipment; and determining the target paging area on the basis of the beam footprint of the target user equipment and the distance threshold.

In an exemplary embodiment, on the basis of the beam footprint of the target user equipment and the distance threshold, determining the target paging area includes: determining the target combined area by taking multiple vertices of the target beam footprint as centers and the distance threshold of the target user equipment as the radius, wherein the target combined area includes areas determined with each vertex as the center; and determining the target paging area on the basis of the target combined area, the target paging area being an area which is externally tangent to the target combined area.

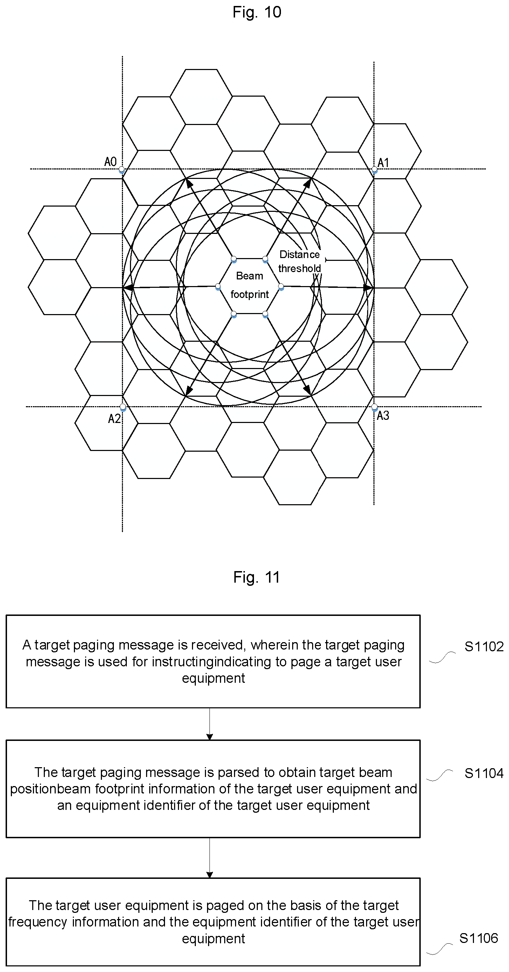

In an exemplary embodiment, as shown in Fig. 10, when determining an target paging area, a target area combination needs to be determined first, i.e., first, with each of the six vertices of the target beam footprint as the center and the distance threshold of the target user equipment as the radius, obtaining the target combined area according to the area determined by taking each vertex as the center; then, according to the outer tangents of the target combined area, determining the target paging area, i.e., determining the rectangular area formed by A0-A1-A2-A3 as shown in Fig. 7 as the target paging area.

In an exemplary embodiment, before respectively sending the target paging message to the N second base stations, the method further includes: determining, on the basis of the target paging area and beam footprint plan information, N second base stations and second beam footprint information of N second base stations, wherein the beam footprint plan information includes information of beam footprints covered by base stations within a predetermined time period; and respectively sending the target paging message to the N second base stations includes: respectively sending the target paging message to each of the N second base stations on the basis of the second beam footprint information of each of the N second base stations.

In an exemplary embodiment, determining, on the basis of a plurality of first target beam footprint identifiers included in the target beam footprint information, a plurality of first target beam footprints covered by the target paging area, wherein each of the plurality of first target beam footprint identifiers is used for uniquely identifying a corresponding one of the plurality of first target beam footprints; determining, on the basis of the plurality of first target beam footprints covered by the target paging area and the beam footprint plan information, the N second base stations, wherein the N second base stations cover the plurality of first target beam footprints covered by the target paging area; and determining, on the basis of a base station identifier of each of the second base stations, the plurality of second target beam footprints covered by each of the second base stations, so as to obtain second beam footprint information of the N second base stations, wherein the plurality of second target beam footprints covered by the N second base stations include the plurality of first target beam footprints.

In an exemplary embodiment, the beam footprint plan information is used for describing beam footprint information covered by base stations in a future period of time, wherein the beam footprint, such as, base station orbit parameters (orbit type, orbit height, orbit position), a beam coverage area (a beam footprint identifier, a coverage area, a beam width, a frequency range), a communication capability (a downlink parameter, an uplink parameter), a service type, a beam footprint planning schedule, and influence factors of beam footprint planning.

In an exemplary embodiment, the second beam footprint information includes, but is not limited to, a beam footprint identifier of a beam footprint covered by the second base station.

In an exemplary embodiment, an AMF determines a target paging area of a target user equipment on the basis of a distance threshold between a target UE and a wavelength identifier 0000 0000 0000 0001 of the target UE, wherein the target paging area includes 10 beam footprints; on the basis of beam footprint identifiers (corresponding to the plurality of first target beam footprints), including 10 beam footprints, in a target paging area, and beam footprints covered by a base station in a future period of time (corresponding to the described beam footprint plan information), determines beam footprint identifiers (corresponding to the plurality of first target beam footprints) of beam footprints covered by three second base stations S-gNB₂, S-gNB₃ and S-gNB₄ (corresponding to the N second base stations) and beam footprint identifiers (corresponding to the second target beam footprints) of beam footprints covered by three sets of second base stations; sends a target paging message to the S-gNB₂, the S-gNB₃ and the S-gNB₄ respectively, wherein the S-gNB₂, the S-gNB₃ and the S-gNB₄ respectively page, in beam footprints covered thereby, the target user equipment according to the device identifier of the target UE and the beam footprint identifier of the beam footprint covered thereby. For example, when the target UE's beam footprint identifier is changed from 0000000 0000 0000 0000 0010 to 0000 0000 0000 0000 0010, (in this embodiment, it is taken as an example that the beam footprint area identified by the beam footprint identifier 0000 0000 0000 0000 0010 is only covered by the S-gNB₂), the S-gNB₂ may be paged to the target UE, and the S-gNB₃ and the S-gNB₄ cannot be paged to the target UE. It should be noted that the foregoing content is only an example of the present disclosure, and common changes and replacements made by a person skilled in the art within the scope of the technical solutions of the present disclosure shall fall within the scope of protection of the present disclosure. For example, the number of beam footprints included in the target paging area is not limited to 10, and may also be 6 or 20; the number of the second base stations is not limited to the above three, and may also be 5, 7 or more; the beam footprint identifier of the target UE is not limited to the binary representation described above; it may also be represented using other parameters, such as Arabic numerals or alphanumeric characters.

In the present embodiment, a second base station is determined on the basis of a target paging area and beam footprint plan information, and a beam footprint covered by each base station is specified. A paging message may be sent to a specific base station possibly covering a target UE more accurately, thereby reducing a broadcast range of the paging message, and achieving the purpose of improving paging efficiency.

Provided is a method for paging a user equipment in the present embodiment. Fig. 11 is a second flowchart of a method for paging a user equipment according to an embodiment of the present disclosure. As shown in Fig. 11, the flow includes the following operations:
operation S1102: a target paging message is received, wherein the target paging message is used for indicating to page a target user equipment;
operation S1104: the target paging message is parsed to obtain target beam footprint information of the target user equipment and an equipment identifier of the target user equipment; and

Operation S1106: the target user equipment is paged on the basis of the target frequency information and the equipment identifier of the target user equipment.

In an exemplary embodiment, the device identifier of the target UE may be a temporary identifier for uniquely identifying the UE in a 5G-GUTI, i.e., a temporary identifier for uniquely identifying the UE in the 5G network, is allocated by the AMF, and is used for the network to rapidly identify the UE. The device identifier of the target UE may also be an SUCI, i.e., the identifier for protecting the privacy of a user, and is generated by encrypting the SUPI. The device identifier of the target UE may also be an PEI for identifying the device of the UE.

In the present embodiment, an execution subject of the foregoing operations may be a base station, or a network element or system having an association relationship with the base station, or another device or system having a similar processing capability.

In an exemplary embodiment, for example, an S-gNB₂, an S-gNB₃ and an S-gNB₄ (corresponding to the described N second base stations) receive a target paging message sent by an AMF; and the S-gNB₂, the S-gNB₃ and the S-gNB₄ parse the target paging message to obtain a device identifier of the target UE and a beam footprint identifier included in the target paging area, and page the target UE according to the device identifier of the target UE and the beam footprint identifier included in the target paging area. During the process when the connection relationship between the target UE and the core network changes from a connected state to an idle state, the target UE may experience a position change, which in turn will cause a change in its beam footprint identifier, for example, changing to 0000 0000 0000 0000 0000 0011 (in the present embodiment, taking an example where a beam footprint area identified by the beam footprint identifier 0000 0000 0000 0000 0000 0011 is only covered by the S-gNB₃), in this case, only the S-gNB₃ may page the target UE, and the S-gNB₂ and the S-gNB₄ cannot page the target UE. It should be noted that the foregoing content is only an example of the present disclosure, and common changes and replacements made by a person skilled in the art within the scope of the technical solutions of the present disclosure shall fall within the scope of protection of the present disclosure. For example, the number of second base stations is not limited to 3, but may also be 5, 7 or more; the beam footprint identifier of the target UE is not limited to the binary representation described above; it may also be represented using other parameters, such as Arabic numerals or alphanumeric characters.

In an exemplary embodiment, receiving the target paging message includes: receiving the target paging message sent by a target network element, wherein the target paging message is sent by the target network element on the basis of a target paging area, and the target paging area is a paging area of the target user equipment, Furthermore, the target paging area is determined by the target network element on the basis of received first beam footprint information from the first base station, the first beam footprint information is determined by the first base station on the basis of the location information of the user equipment, The first base station is a base station that performs communication after the target user equipment establishes a connection with the core network.

In an exemplary embodiment, the target network element includes an access and mobility management function (AMF).

By means of the described operations, when determining a target paging area of a target user equipment, the target paging area is determined on the basis of first beam footprint information, and the first beam footprint information is related to position information of the target user equipment, wherein determining a paging area by means of the beam footprint information may cover adjacent beam footprints to which a user equipment may move. The method for calculating a paging area on the basis of a beam footprint may more accurately determine a paging area compared with calculation based on fuzzy position. In the present disclosure, beam footprint information sent by the first base station is directly received, and paging is performed according to the beam footprint information, and therefore the problem in the related art of low accuracy of paging a user equipment is solved, and the effect of improving the accuracy of paging the user equipment is achieved.

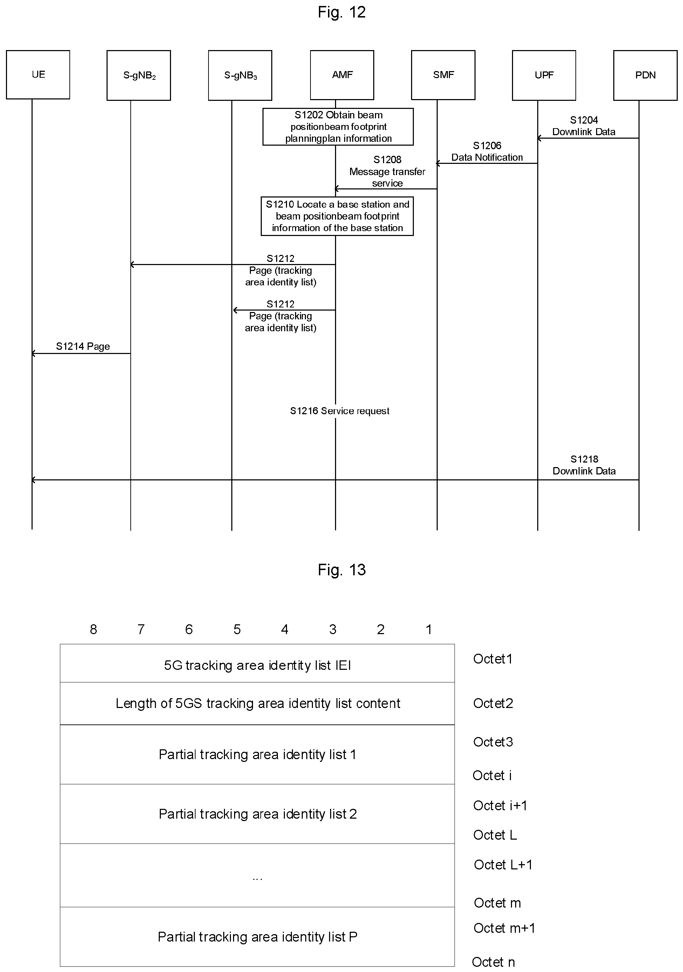

Each of the above embodiments has been described from a unilateral perspective. To facilitate understanding, the following provides an overall explanation of the present disclosure in conjunction with specific embodiments:
the present embodiment provides a solution for receiving beam footprint information sent by a base station and performing paging according to the beam footprint information, and therefore, the problem in the related art of low accuracy of paging a user equipment is solved, and the effect of improving the accuracy of paging the user equipment is achieved. As shown in Fig. 12, the method includes the following operations:
S1202: an AMF obtains beam footprint plan information from an operation and control system;
S1204: a UPF receives Downlink Data from a PDN;
S1206: the UPF reports, to the SMF and by means of the Data Notification, that a network side has Downlink Data to be forwarded to the target UE;
S1208: the SMF calls Namf_Communication_N1N2 Message Transfer NAMF (i.e. communication N1/N2 message transfer) of the AMF, so as to subsequently send N1 and N2 interface messages to the second base station by means of the AMF;
S1210: the AMF determines the target paging area of the target UE on the basis of the target UE's beam footprint identifier 0000 0000 0000 0000 0001 reported in the AN Release by the S-gNB₁ and in combination with a distance threshold of the target UE, wherein the target paging area includes 12 beam footprints; on the basis of the beam footprint identifiers (corresponding to the described plurality of first target beam footprints) which include 12 beam footprints and are in the target paging area, and beam footprints covered by a base station in a future period of time (corresponding to the described beam footprint plan information), determines two second base stations, i.e. the S-gNB₂ and the S-gNB₃, and two sets of beam footprint identifiers (corresponding to the second target beam footprints) of beam footprints covered by the two second base stations;
S1212: the AMF sends Paging (i.e. a paging message) to the S-gNB₂ and the S-gNB₃ respectively, wherein the target paging message includes, but is not limited to, a device identifier of a target UE and a TAI List; the TAI List reuses a 5G information element format; the TAC fills beam footprint identifiers contained in the paging area; the TAC is contained in the TAI; a plurality of TAIs are encapsulated into a TAI List; and as shown in Fig. 13, the TAI List includes 5G tracking area identity list IEI, Length of 5GS tracking area identity list content, Partial tracking area identity list 1, Partial tracking area identity list 2,... Partial tracking area identity list p. Each Partial tracking area identity list in the figure corresponds to one tracking area identifier (TAI). It should be noted that the number of TIAs encapsulated in the TAI List may be indicated by the number of elements in Fig. 6.
S1214: the S-gNB₂ and the S-gNB₃ parse the TAI List, perform paging on the basis of the beam footprint identifier corresponding to paging in the TAI List, and use the device identifier of the target UE and the beam footprint identifiers of the beam footprints covered thereby to page, in the beam footprints covered thereby, the target user equipment. For example, in a case where the beam footprint identifier of the target UE changes from 0000 0000 0000 0000 0000 0001 to 0000 0000 0000 0000 0000 0010, and is located at the beam footprint covered by the S-gNB₂, the S-gNB₂ may page the target UE, while the S-gNB₃ may not page the target UE.
S1216: the core network, the target UE and the S-gNB₂ execute the Service request.
S1218: after the Service Request is executed among the core network, the target UE and the S-gNB₂, the target UE receives the Downlink Data transmitted from the PDN.

From the description of the described embodiments, a person skilled in the art would have been able to clearly understand that the method in the described embodiments may be implemented by using software and necessary general hardware platforms, and of course may also be implemented using hardware, but in many cases, the former is a better embodiment. Based on such understanding, the essence of technical solution of the embodiments of the present disclosure, or in other words, the part of the technical solutions making contributions to the prior art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the methods described in various embodiments of the present disclosure.

The present embodiment further provides an apparatus for paging a user equipment. The apparatus is configured to implement the described embodiments and preferred implementations, which has been described and will not be described repeatedly here.

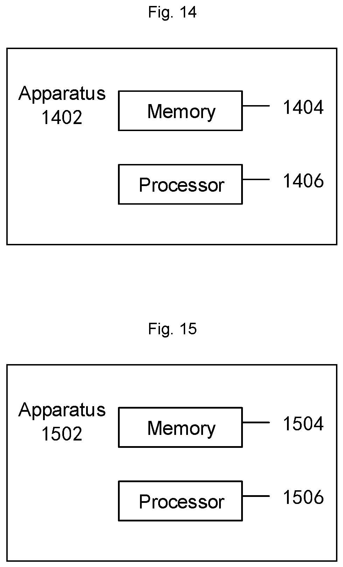

Fig. 14 is a first structure block diagram of an apparatus for paging a user equipment according to an embodiment of the present disclosure. As shown in Fig. 14, the apparatus 1402 includes a memory 1404, a processor 1406, and a computer program that is stored on the memory and can run on the memory. When executing the foregoing computer program, the processor implements the following operations: receiving first beam footprint information sent by a first base station, wherein the first beam footprint information is the beam information when the connection relationship between the target user equipment and the core network is in a connected state, and the first base station is a base station that communicates with the target user equipment when the connection relationship between the target user equipment and the core network is in a connected state; on the basis of the first beam footprint information and a distance threshold of the target user equipment, determining a target paging area of the target user equipment, wherein the distance threshold is used for determining a range of the target paging area; on the basis of the target paging area and beam footprint plan information, determining second beam footprint information of N second base stations and N second base stations, wherein the beam footprint plan information is used for describing beam footprint information covered by the base stations within a future period of time, and N is a natural number greater than or equal to 1; respectively sending a target paging message to N second base stations, wherein the target paging message includes a device identifier of the target user equipment and target beam footprint information of the target paging area, and the target paging message is used for paging the target user equipment in the N second base stations according to the second beam footprint information.

The processor, when executing the computer program, may implement the method of receiving first beam footprint information sent by a first base station in the following manner: receiving a first signaling message sent by the first base station, wherein the first signaling message is used for indicating that the connection between the target user equipment and the core network has been released; parsing the first signaling message to obtain a first tracking area identifier; and determining the first beam footprint information on the basis of the first tracking area identifier.

The processor, when executing the computer program, may further implement the following operations: before receiving the first beam footprint information sent by the first base station, receiving a second signaling message sent by an initial base station, wherein the initial base station is a base station for communication when a connection between the target user equipment and the core network is requested to be established, and the second signaling message is used for indicating beam footprint information of the target user equipment; parsing the second signaling message to obtain a second tracking area identifier; determining initial beam footprint information on the basis of the second tracking area identifier, wherein the initial beam footprint information is determined by the initial base station on the basis of initial position information sent by the target user equipment; and establishing the connection between the target user equipment and the core network on the basis of the initial beam footprint information.

The processor, when executing the computer program, may implement the method of determining the target paging area of the target user equipment on the basis of the first beam footprint information in the following manner: determining a beam footprint of the target user equipment on the basis of a target beam footprint identifier included in the first beam footprint information, wherein the target beam footprint identifier is used for uniquely identifying the beam footprint of the target user equipment; and determining the target paging area on the basis of the beam footprint of the target user equipment.

The processor, when executing the computer program, may implement the method of determining the target paging area on the basis of the beam footprint of the target user equipment in the following manner: determining a distance threshold matching the target user equipment; and determining the target paging area on the basis of the beam footprint of the target user equipment and the distance threshold.

The processor, when executing the computer program, may implement the following operations: before respectively sending the target paging message to the N second base stations, determining, on the basis of the target paging area and beam footprint plan information, the N second base stations and second beam footprint information of N second base stations, wherein the beam footprint plan information includes information of beam footprints covered by base stations within a predetermined time period; and the processor, when executing the computer program, may implement the method of respectively sending the target paging message to the N second base stations in the following manner: respectively sending the target paging message to each of the N second base stations on the basis of the second beam footprint information of each of the N second base stations.

The processor, when executing the computer program, may implement the method of determining, on the basis of the target paging area and beam footprint plan information, the N second base stations and the second beam footprint information of N second base stations in the following manner: determining, on the basis of a plurality of first target beam footprint identifiers included in the target beam footprint information, a plurality of first target beam footprints covered by the target paging area, wherein each of the plurality of first target beam footprint identifiers is used for uniquely identifying a corresponding one of the plurality of first target beam footprints; determining, on the basis of the plurality of first target beam footprints covered by the target paging area and the beam footprint plan information, the N second base stations, wherein the N second base stations cover the plurality of first target beam footprints covered by the target paging area; and determining, on the basis of a base station identifier of each of the second base stations, the plurality of second target beam footprints covered by each of the second base stations, so as to obtain second beam footprint information of the N second base stations, wherein the plurality of second target beam footprints covered by the N second base stations include the plurality of first target beam footprints.

The present embodiment further provides an apparatus for paging a user equipment. The apparatus is configured to implement the described embodiments and preferred implementations, which has been described and will not be described repeatedly here.

Fig. 15 is a structural block diagram of an apparatus for paging a user equipment according to an embodiment of the present disclosure. As shown in Fig. 15, the apparatus 1502 includes a memory 1504, a processor 1506, and a computer program that is stored on the memory and run on the memory, wherein the processor, when executing the computer program, implements the following operations: receiving a target paging message, wherein the target paging message is used for indicating to page a target user equipment; parsing the target paging message to obtain target beam footprint information of the target user equipment and an equipment identifier of the target user equipment; and paging the target user equipment on the basis of the target beam footprint information and the equipment identity of the target user equipment.

The processor, when executing the computer program, may implement the method of receiving the target paging message in the following manner: receiving the target paging message sent by a target network element, wherein the target paging message is sent by the target network element on the basis of a target paging area, the target paging area is a paging area of the target user equipment, and the target paging area is determined by the target network element on the basis of received first beam footprint information from a first base station, the first beam footprint information is determined by the first base station on the basis of position information of the user equipment, and the first base station is a base station for communication after a connection between the target user equipment and a core network has been established.

The target network element includes an access and mobility management function (AMF).

Embodiments of the present disclosure provide a computer program product, including a computer program, wherein the computer program implements the operations of any one of the foregoing method embodiments when being executed by the processor.

The embodiments of the present disclosure further provide a computer readable storage medium storing a computer program, wherein the computer program is configured to execute, when running, the operations in any one of the described method embodiments.

In an exemplary embodiment, the computer readable storage medium may include, but is not limited to, any medium that may store a computer program, such as a USB flash drive, a Read-Only Memory (ROM), a Random Access Memory (RAM), a removable hard disk, a magnetic disk, or an optical disc.

An embodiment of the present disclosure also provides an electronic device, comprising a memory and a processor, wherein the memory stores a computer program, and the processor is configured to run the computer program to execute the operations in any one of the method.

In an exemplary embodiment, the electronic device may further include a transmission device and an input/output device, wherein the transmission device is connected to the processor, and the input/output device is connected to the processor.

For specific examples in the present embodiment, reference may be made to the examples described in the described embodiments and exemplary embodiments, and thus they will not be repeated again in the present embodiment.

Obviously, those skilled in the art should understand that the modules or operations in the present disclosure may be implemented by using a general computing device, and they may be integrated in a single computing device, and may also be distributed over a network consisting of a plurality of computing devices. They may be implemented by using executable program codes of the computing devices. Thus, they may be stored in a storage device and executed by the computing devices. Furthermore, in some cases, the shown or described operations may be executed in an order different from that described here, or they may be respectively implemented by individual Integrated Circuit modules, or they may be implemented by making a plurality of the modules or operations into a single Integrated Circuit module. Hence, the present disclosure is not limited to any specific combinations of hardware and software.

The described content merely relates to preferable embodiments of the present disclosure and is not intended to limit the present disclosure. For a person skilled in the art, the present disclosure may have various modifications and variations. Any modifications, equivalent replacements, improvements, etc. made within the principle of the present disclosure shall all belong to the scope of protection of the present disclosure.

## Claims

1. A method for paging a user equipment, comprising:
receiving first beam footprint information sent by a first base station, wherein the first beam footprint information is determined by the first base station on the basis of position information of a target user equipment, and the first base station is a base station for communication after a connection between the target user equipment and a core network has been established;
determining a target paging area of the target user equipment on the basis of the first beam footprint information; and
respectively sending a target paging message to N second base stations, wherein the target paging message comprises a device identifier of the target user equipment and target beam footprint information of the target paging area, and the target paging message is used for paging the target user equipment in the N second base stations, N being a positive integer.

2. The method according to claim 1, wherein receiving the first beam footprint information sent by the first base station comprises:
receiving a first signaling message sent by the first base station, wherein the first signaling message is used for indicating that the connection between the target user equipment and the core network has been released;
parsing the first signaling message to obtain a first tracking area identifier; and
determining the first beam footprint information on the basis of the first tracking area identifier.

3. The method according to any one of claims 1 to 2, wherein before receiving the first beam footprint information sent by the first base station, the method further comprises:
receiving a second signaling message sent by an initial base station, wherein the initial base station is a base station for communication when a connection between the target user equipment and the core network is requested to be established, and the second signaling message is used for indicating beam footprint information of the target user equipment;
parsing the second signaling message to obtain a second tracking area identifier;
determining initial beam footprint information on the basis of the second tracking area identifier, wherein the initial beam footprint information is determined by the initial base station on the basis of initial position information sent by the target user equipment; and
establishing the connection between the target user equipment and the core network on the basis of the initial beam footprint information.

4. The method according to any one of claims 1 to 3, wherein determining the target paging area of the target user equipment on the basis of the first beam footprint information comprises:
determining a beam footprint of the target user equipment on the basis of a target beam footprint identifier included in the first beam footprint information, wherein the target beam footprint identifier is used for uniquely identifying the beam footprint of the target user equipment; and
determining the target paging area on the basis of the beam footprint of the target user equipment.

5. The method according to claim 4, wherein determining the target paging area on the basis of the beam footprint of the target user equipment comprises:
determining a distance threshold matching the target user equipment; and
determining the target paging area on the basis of the beam footprint of the target user equipment and the distance threshold.

6. The method according to any one of claims 1 to 5, wherein
before respectively sending the target paging message to the N second base stations, the method further comprises: determining, on the basis of the target paging area and beam footprint plan information, the N second base stations and second beam footprint information of each of the N second base stations, wherein the beam footprint plan information comprises information of beam footprints covered by base stations within a predetermined time period; and
respectively sending the target paging message to the N second base stations comprises: respectively sending the target paging message to each of the N second base stations on the basis of the second beam footprint information of each of the N second base stations.

7. The method according to claim 6, wherein determining, on the basis of the target paging area and beam footprint plan information, the N second base stations and the second beam footprint information of each of the N second base stations comprises:
determining, on the basis of a plurality of first target beam footprint identifiers included in the target beam footprint information, a plurality of first target beam footprints covered by the target paging area, wherein each of the plurality of first target beam footprint identifiers is used for uniquely identifying a corresponding one of the plurality of first target beam footprints;
determining, on the basis of the plurality of first target beam footprints covered by the target paging area and the beam footprint plan information, the N second base stations, wherein the N second base stations cover the plurality of first target beam footprints covered by the target paging area; and
determining, on the basis of a base station identifier of each of the second base stations, the plurality of second target beam footprints covered by each of the second base stations, so as to obtain second beam footprint information of the N second base stations, wherein the plurality of second target beam footprints covered by the N second base stations comprise the plurality of first target beam footprints.

8. A method for paging a user equipment, comprising:
receiving a target paging message, wherein the target paging message is used for indicating to page a target user equipment;
parsing the target paging message to obtain target beam footprint information of the target user equipment and an equipment identifier of the target user equipment; and
paging the target user equipment on the basis of the target beam footprint information and the equipment identifier of the target user equipment.

9. The method according to claim 8, wherein receiving the target paging message comprises:
receiving the target paging message sent by a target network element, wherein the target paging message is sent by the target network element on the basis of a target paging area, the target paging area is a paging area of the target user equipment, and the target paging area is determined by the target network element on the basis of received first beam footprint information from a first base station, the first beam footprint information is determined by the first base station on the basis of position information of the user equipment, and the first base station is a base station for communication after a connection between the target user equipment and a core network has been established.

10. The method according to claim 9, wherein the target network element comprises an access and mobility management function (AMF).

11. An apparatus for paging a user equipment, comprising a memory, a processor, and a computer program stored in the memory and operable in the memory, wherein the processor, when executing the computer program, implements the following operations:
receiving first beam footprint information sent by a first base station, wherein the first beam footprint information is determined by the first base station on the basis of position information of a target user equipment, and the first base station is a base station for communication after a connection between the target user equipment and a core network has been established;
determining a target paging area of the target user equipment on the basis of the first beam footprint information; and
respectively sending a target paging message to N second base stations, wherein the target paging message comprises a device identifier of the target user equipment and target beam footprint information of the target paging area, and the target paging message is used for paging the target user equipment in the N second base stations, N being a positive integer.

12. An apparatus for paging a user equipment, comprising a memory, a processor, and a computer program stored in the memory and executable on the processor, wherein the processor, when executing the computer program, implements the following operations:
receiving a target paging message, wherein the target paging message is used for indicating to page a target user equipment;
parsing the target paging message to obtain target beam footprint information of the target user equipment and an equipment identifier of the target user equipment; and
paging the target user equipment on the basis of the target beam footprint information and the equipment identifier of the target user equipment.

13. A computer program product comprising a computer program which, when executed by a processor, implements the operations of the method according to any one of claims 1 to 7, or implements the operations of the method according to any one of claims 8 to 10.

14. A computer readable storage medium, storing a computer program which, when executed by a processor, implements the operations of the method according to any one of claims 1 to 7, or the operations of the method according to any one of claims 8 to 10.

15. An electronic device, comprising a memory, a processor, and a computer program stored on the memory and capable of running on the processor, wherein when the processor executes the operations of the method according to any one of claims 1 to 7, or the operations of the method according to any one of claims 8 to 10.
